# EUROPÄISCHE PATENTSCHRIFT

(11) **EP 4 469 767 B1**
(45) Veröffentlichungstag und Bekanntmachung des Hinweises auf die Patenterteilung: **02.12.2026**
(21) Anmeldenummer: 23718642.4
(22) Anmeldetag: 06.04.2023
(51) Int. Cl.: G01L 1/16, F16B 31/02, G01L 1/25, G01L 5/00, G01L 5/24, G01M 5/00

(54) **SCHRAUBVERBINDUNG**
SCREW CONNECTION
CONNEXION VISSÉE

(30) Priorität: 14.04.2022 DE 102022109187
(43) Veröffentlichungstag der Anmeldung: 04.12.2024
(73) Patentinhaber: Liebherr-Werk Biberach GmbH, 88400 Biberach an der Riss (DE)
(72) Erfinder: MÖLLER, Timo, 73463 Westhausen (DE); BRAMBERGER, Robert, 88400 Biberach an der Riss (DE); WINDORFER, Torsten, 88400 Biberach an der Riss (DE)
(74) Vertreter: Lorenz Seidler Gossel Part. mbB
(86) Internationale Anmeldenummer: PCT/EP2023/059221
(87) Internationale Veröffentlichungsnummer: WO 2023/198618

(56) Entgegenhaltungen:
- CN-A- 111 707 396
- DE-A1- 10 138 261
- RU-C1- 2 467 296
- US-A1- 2021 355 977
- US-B1- 9 127 998

## Beschreibung

Die vorliegende Erfindung betrifft eine Schraubverbindung sowie eine Baumaschine, beispielsweise einen Kran, mit einer solchen Schraubverbindung.

Jede Schraubverbindung unterliegt dem Setzkraftverlust. Hierunter versteht man ein eine plastische Längenänderung der Schraube und der damit verspannten Teile. Sie tritt auf, da die Bestandteile der Schraubverbindung eine gewisse Oberflächenrauheit besitzen, die jedoch nach Anziehen der Schraubverbindung plattgedrückt wird, was dazu führt, dass die Verbindungsteile entlastet werden. Dieses Lockern bezeichnet man als Setzkraftverlust. Neben dem Setzkraftverlust unterliegt jede Schraubverbindung auch einer gewissen Materialermüdung, die sich über die Lebenszeit ergibt und die ebenfalls eine Verminderung der Vorspannkraft mit sich bringt.

Bei der Dimensionierung einer Schraubverbindung muss der Setzkraftverlust und die Materialermüdung berücksichtigt werden, womit aber oftmals eine Überdimensionierung der Schraubverbindung einhergeht. Darüber hinaus ist es erforderlich, Schrauben und Muttern für eine gleichbleibende Sicherheit der Schraubverbindung nach Ablauf eines gewissen Zeitintervalls zu wechseln oder nachvollziehen.

Aus dem Stand der Technik sind sogenannte Kraftmessdosen bekannt, die zur Überwachung von Vorspannkräften einer Schraubverbindung genutzt werden. Dabei wird in der Regel auf ein resistives Messverfahren zurückgegriffen, bei dem die Kraft der Schraubverbindung zu einer Deformation führt, welche über eine Dehnmesstechnik erfasst und über eine entsprechende Verarbeitungselektronik ausgewertet wird. Verändert sich die durch eine Schraubverbindung auf eine Kraftmessdose ausgeübte Kraft, wird dies als Spannkraftverlust interpretiert, sodass entsprechende Gegenmaßnahmen getroffen werden können. Ein Dokument aus dem Stand der Technik, das sich mit einer Schraubverbindung mit den in der Einleitung von Anspruch 1 genannten technischen Merkmalen befasst, ist das Patentdokument RU 2 467 296 C1.

Insbesondere ist hierbei nachteilhaft, dass die in der Kraftmessdose angeordnete Messbrücke leistungsbezogen zu dimensionieren ist und somit nur für ein bestimmtes Anwendungsszenario infrage kommt.

Weiter nachteilhaft ist bei den aus dem Stand der Technik bekannten Kraftmessdosen, dass deren Ansprechverhalten recht träge ist und Eckfrequenzen im Bereich von 10 Hz bereits eine technologische Herausforderung darstellen. Insbesondere für hochdynamische Systeme eignen sich daher Kraftmessdosen, die das resistive Messverfahren verwenden, nicht.

Auch ist die fortschreitende Miniaturisierung der Kraftmessdose bei Verwendung des resistiven Messverfahrens problematisch, da dieses aufgrund des genutzten Messprinzips eine gewisse Mindestausdehnung erfordert.

Neben dem resistiven Messverfahren ist aus dem Stand der Technik auch noch die sogenannte Schallemissionsprüfung bekannt. Dieses rein passive Verfahren wird in der Regel bei Verbundwerkstoffen angewandt und macht sich zunutze, dass bei plötzlichen Veränderungen im Gefüge eines Werkstoffs (Riss oder dergleichen), beispielsweise hervorgerufen durch eine mechanische Belastung, eine Schallemission erzeugt wird, die von einem entsprechenden Empfängerbauteil detektiert werden kann. Die Analyse der aufgenommenen Schallemission erlaubt dann einen Rückschluss auf die strukturelle Integrität des Werkstoffs bzw. des Bauteils. Nachteilhaft hieran ist, dass Veränderungen in der Krafteinwirkung auf einen Werkstoff, die nicht zu einer Gefügeveränderung führen, nicht exakt detektiert werden können. Ein Setzkraftverlust einer Schraubverbindung ist nach der aus dem Stand der Technik bekannten Schallemissionsprüfung nicht zu erfassen.

Es ist das Ziel der vorliegenden Erfindung die oben aufgeführten Nachteile zu überwinden oder zumindest abzumildern, um eine verbesserte Schraubverbindung vorzusehen. Vorteilhafterweise sollte diese die dazu in der Lage sein, einen Spannungszustand der Schraubverbindung zu bestimmen.

Dies gelingt mit einer Schraubverbindung, die sämtliche Merkmale des Anspruchs 1 aufweist. Die Erfindung betrifft ferner eine Baumaschine, insbesondere einen Kran, welche die erfindungsgemäße Schraubverbindung enthält. Vorteilhafte Ausgestaltungen der vorliegenden Erfindung finden sich dabei in den Unteransprüchen.

Eine erfindungsgemäße Schraubverbindung umfasst dabei einen Schraubenkörper mit einem Außengewinde, ein Gegenstück, insbesondere eine Schraubenmutter, mit einem auf das Außengewinde abgestimmten Innengewinde, in das der Schraubenkörper eingeschraubt ist, eine Distanzhülse zum Klemmen zwischen einem Schraubenkopf des Schraubenkörpers und dem Gegenstück, und ein Sensorsystem, das dazu ausgelegt ist, einen in dem Schraubenkörper wirkenden Spannungszustand zu bestimmen. Die Erfindung ist dadurch gekennzeichnet, dass das Sensorsystem einen in der Distanzhülse angeordneten Sender sowie einen in der Distanzhülse angeordneten Empfänger aufweist, wobei der Sender dazu ausgelegt ist, elektrische Energie in mechanische Oberflächenwellen umzuwandeln, der Empfänger dazu ausgelegt ist, mechanische Oberflächenwellen in elektrische Energie umzuwandeln, und das Sensorsystem ferner dazu ausgelegt ist, anhand der Veränderung der ausgesendeten mechanischen Oberflächenwellen zu den empfangenen mechanische Oberflächenwellen auf den in dem Schraubenkörper und/oder der Distanzhülse wirkenden Spannungszustand zu schließen.

Nach der Erfindung ist also vorgesehen, auf den Spannungszustand der Schraube bzw. auf die Kraft, die auf die Distanzhülse einwirkt, mittels aktiver Schallmesstechnik zu schließen. Anders als bei der aus dem Stand der Technik bekannten Schallemissionsanalyse wird nach der Erfindung aktiv eine mechanische Oberflächenwelle in das Bauteil induziert und deren (zurückgeworfene) Antwort analysiert. Die reflektierte Welle enthält Informationen über die Strukturerregung der Distanzhülse, sodass auf eine einwirkende Kraft (bzw. den Spannungszustand der Schraube) geschlossen werden kann.

Dabei kann vorgesehen sein, dass die ausgesandten mechanischen Oberflächenwellen aufgrund der Strukturdämpfung der Distanzhülse, die durch die einwirkende Kraft der Schraubverbindung vorliegt, einer charakteristischen Änderung unterzogen sind, die einen Rückschluss auf den Spannungszustand zulässt.

Durch das Prinzip eines aktiven Aussendens von mechanischen Oberflächenwellen sind auch hochdynamische Veränderungsvorgänge in dem Spannungszustand erfassbar, die das Ansprechverhalten von herkömmlichen resistiven Messverfahren deutlich übertreffen.

Nach einer optionalen Fortbildung der Erfindung kann vorgesehen sein, dass der Sender sowie der Empfänger des Sensorsystems jeweils ein ferroelektrisches Element, insbesondere ein Piezoelement ist. Insbesondere ein Piezoelement eignet sich gut zum Erzeugen von mechanischen Oberflächenwellen, wobei vorteilhafterweise eine stoffschlüssige Verbindung zwischen dem Bauteil, in welches die mechanischen Oberflächenwellen zu induzieren sind, und dem Piezoelement besteht, damit die Übertragung der Wellen in das Bauteil bzw. von dem Bauteil zu dem Piezoelement ohne größere Verluste ein- bzw. ausgekoppelt wird.

Nach einer weiteren optionalen Modifikation der vorliegenden Erfindung kann vorgesehen sein, dass der Sender dazu ausgelegt ist, mechanische Oberflächenwellen an der Distanzhülse hervorzurufen und/oder der Empfänger dazu ausgelegt ist, mechanische Oberflächenwellen der Distanzhülse aufzunehmen und in entsprechende elektrische Signale umzuwandeln.

Der Sender ist demnach dazu ausgestaltet, elektrische Signale in eine mechanische Oberflächenwelle der Distanzhülse zu wandeln, wobei entsprechend dazu der Empfänger dazu ausgelegt ist, eine reflektierte mechanische Oberflächenwelle der Distanzhülse aufzunehmen und in ein dazu korrespondierendes elektrisches Signal zu wandeln.

Vorteilhafterweise ist nach der Erfindung vorgesehen, dass der Sender und/oder der Empfänger stoffschlüssig in der Distanzhülse angeordnet ist/sind. Dabei kann vorgesehen sein, dass sowohl der Sender wie auch der Empfänger allseitig von der Distanzhülse umschlossen sind, sodass der Sender und/oder der Empfänger in dem Material der Distanzhülse eingebettet oder an diesem angebracht ist. Dies ist insbesondere von Vorteil, da durch das Einbetten kein weiteres externes Gehäuse zum Schutz von Sender und Empfänger erforderlich ist, was die Handhabung der erfindungsgemäßen Schraubverbindung vereinfacht.

Nach einer optionalen Fortbildung der vorliegenden Erfindung kann vorgesehen sein, dass das Sensorsystem dazu ausgelegt ist, eine Spannungszustandsänderung in der Distanzhülse und/oder des Schraubenkörpers aufgrund einer Veränderung der Wellen-Charakteristik zwischen den ausgesendeten mechanischen Oberflächenwellen und den empfangenen mechanische Oberflächenwellen zu bestimmen.

Durch den Abgleich der Eigenschaften von den ausgesendeten Oberflächenwelle zu den empfangenen Oberflächenwellen kann auf eine Veränderung im Spannungszustand der Distanzhülse (und damit auch auf den Schraubenkörper) geschlossen werden. Das Sensorsystem kann hierzu eine Analyseeinheit umfassen, die den vorstehend beschriebenen Abgleich vornimmt und aus den detektierten Unterschieden in der Wellen-Charakteristik auf einen Setzkraftverlust oder dergleichen schließen kann.

Dabei kann beispielsweise vorgesehen sein, dass die Wellen-Charakteristik eine Wellenamplitude, eine Ausbreitungsfrequenz, eine Güte, eine relative Phasenlage und/oder die dominante Schwingungsmode berücksichtigt.

Weiter kann nach einer Fortbildung der Erfindung vorgesehen sein, dass die mechanischen Oberflächenwellen Körperschallwellen, insbesondere Rayleigh-Wellen sind.

Rayleigh-Wellen eignen sich dabei besonders für die vorliegende Erfindung, da mit diesen eine sehr gute Ergebnisgüte erlangt wird.

Ferner kann nach einer Variante der vorliegenden Erfindung vorgesehen sein, dass das Sensorsystem ferner dazu ausgelegt ist, eine Gruppenlaufgeschwindigkeit einer Welle, eine obere Einhüllende und/oder eine untere Einhüllende einer Welle, insbesondere Körperschallwelle, zu analysieren, um auf einen veränderten Spannungszustand der Distanzhülse und/oder des Schraubenkörpers zu schließen.

So kann beispielsweise die Auswertung der Gruppenlaufgeschwindigkeit einer Körperschallwelle als Strukturdämpfung mittels miniaturisierter Anwendung der experimentellen Modalanalyse interpretiert werden. Zudem kann die Strukturdämpfung in eine Analyse einer oberen Einhüllenden und einer unteren Einhüllenden unterteilt werden, sodass sowohl quasi-statische als auch dynamische Zustandsänderungen sehr schnell ausgewertet werden können.

Nach einer weiteren optionalen Modifikation der vorliegenden Erfindung kann vorgesehen sein, dass die Ausbreitungsfrequenz der vom Sender abgegebenen mechanischen Oberflächenwellen im Bereich von 20 kHz bis 20 MHz liegt und/oder die Amplitude der vom Sender abgegebenen mechanischen Oberflächenwellen im Bereich weniger Nanometer bis Pikometer liegt.

Dem Fachmann ist klar, dass das vom Sender abgegebene Wellensignal zeitvariant ist und unterschiedliche Muster annehmen kann, um auf eine Zustandsänderung zu schließen.

Ferner kann nach einer Fortbildung der Erfindung vorgesehen sein, dass der Sender und/oder der Empfänger in die Distanzhülse eingebettet ist/sind, vorzugsweise allseitig von dem Material der Distanzhülse umgeben ist/sind.

Vorteilhafterweise kann nach der Erfindung vorgesehen sein, dass das Sensorsystem dazu ausgelegt ist, den Spannungszustand der Distanzhülse und/oder des Schraubenkörpers in einer Frequenz von mindestens 1 kHz, vorzugsweise in einer Frequenz von mindestens 3 kHz, bevorzugterweise in einer Frequenz von mindestens 8 kHz zu bestimmen.

Diese hohen Frequenzen ermöglichen somit auch ein schnelles Reagieren auf eine detektierte Zustandsänderung der Schraubverbindung. Diese schnelle Reaktionszeit ist ein wesentlicher Vorteil, um rechtzeitig Gegenmaßnahmen ergreifen zu können, sollte das plötzliche Lösen der Schraubverbindung oder eine ähnliche Situation erfasst werden.

Weiter ist nach der vorliegenden Erfindung vorgesehen, dass sich unmittelbar an den Sender und/oder den Empfänger eine Messstrecke in der Oberfläche der Distanzhülse anschließt, die sich vorzugsweise in ihrer Oberflächentopologie gegenüber den anderen Bereichen der Distanzhülse absetzt, insbesondere durch Vorsehen einer Nut, die die Messstrecke definiert und deren Randbereiche zu einem Reflektieren der Oberflächenwellen führen, wobei bevorzugterweise das Nutinnere gegenüber den Randbereichen abgesetzt ist und nach einer optionalen Ausführung eine glattgeschliffen Oberfläche aufweist.

Dabei kann vorgesehen sein, dass zwischen dem Sender und dem Empfänger die Messstrecke angeordnet ist und der Empfänger an einem Ende und der Sender an dem anderen Ende der Messstrecke platziert ist. Dies ist aber nicht notwendigerweise erforderlich, da auch das Platzieren von Sender und Empfänger an einem gemeinsamen Ende der Messstrecke die gewünschte Funktionalität mit sich bringt.

Nach einer weiteren optionalen Fortbildung der Erfindung kann vorgesehen sein, dass das Sensorsystem ferner dazu ausgelegt ist, beim Erfassen einer Variation des Spannungszustands der Distanzhülse und/oder des Schraubenkörpers, die oberhalb eines bestimmten Schwellenwerts liegt, ein Signal an eine Kontrolleinheit zu senden, vorzugsweise um entsprechende Gegenmaßnahmen anzustoßen.

Die Erfindung betrifft ferner eine Baumaschine, insbesondere einen Kran, mit mindestens einer Schraubverbindung nach einem der vorhergehenden Ansprüche, wobei eine Signalisierung über die Notwendigkeit einer Wartung auf den von dem Sensorsystem bestimmten Spannungszustand der Distanzhülse und/oder des Schraubenkörpers basiert.

Dadurch ist nicht mehr erforderlich an starren Wartungsintervallen festzuhalten, sondern es kann eine Wartung je nach Bedarf erfolgen.

Die Erfindung betrifft ferner einen Kran mit mindestens einer Schraubverbindung nach einer der vorstehend diskutierten Varianten, wobei eine Traglasttabelle zum zulässigen Ausführen eines Lasthubs des Krans in einer Steuereinheit abgelegt ist und die Steuereinheit dazu ausgelegt ist, auf Grundlage des mindestens einen bestimmten Spannungszustands der Distanzhülse und/oder des Schraubenkörpers die Traglasttabelle zu aktualisieren, vorzugsweise wobei die mindestens eine Schraubverbindung Mastschüsse oder Auslegerelemente des Krans verbindet.

Mit der erfindungsgemäßen Schraubverbindung lassen sich strukturdynamische Grenzfälle erfassen und überwachen. Dadurch ist es möglich, eine Traglasttabelle an das tatsächliche Leistungsniveau des Krans anzupassen, das sich beispielsweise über die Nutzungsdauer des Krans absenken kann.

Weitere Merkmale, Einzelheiten und Vorteile der Erfindung werden anhand der Figurenbeschreibung ersichtlich. Dabei zeigen:
- Fig. 1:: eine Teildarstellung der Distanzhülse der erfindungsgemäßen Schraubverbindung,
- Fig. 2:: eine Teildarstellung der Distanzhülse der erfindungsgemäßen Schraubverbindung nach einer weiteren Ausführungsform, und
- Fig. 3a/b:: eine jeweilige Darstellung zur möglichen Anbindung von Sender und/oder Empfänger in der Distanzhülse.

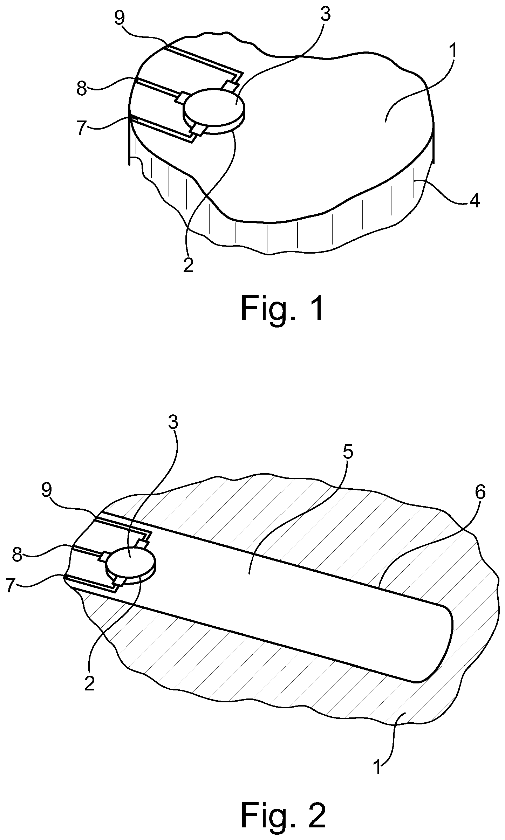

Fig. 1 zeigt eine Teildarstellung der Distanzhülse 1 der erfindungsgemäßen Schraubverbindung. Man erkennt dort den Sender 2, der in einer Sandwichbauweise zusammen mit dem Empfänger 3 angeordnet ist. Sowohl der Sender 2 wie auch der Empfänger 3 sind dabei mit einer entsprechenden elektrischen Leitung 7 ,9 verbunden, über die das elektrische Signal zugeführt bzw. abgeführt wird. Darüber hinaus ist auch ein Masseanschluss 8 vorhanden, der zu der Sende-/ Empfangseinheit geführt ist.

Der Sender 2, der beispielsweise ein Piezoelement ist, wird über ein elektrisches Signal, welches über Leitung 7 an den Sender 2 geführt ist, angeregt und bewirkt eine mechanische Oberflächenwelle auf Distanzhülse 1. Diese breitet sich dann in dem Material 4 der Distanzhülse 1 aus und wird zumindest teilweise zum Empfänger 3 zurückreflektiert. Aufgrund der Strukturdämpfung der Distanzhülse 1 werden in Abhängigkeit einer auf die Distanzhülse 1 wirkenden Kraft unterschiedliche Charakteristika der ausgesendeten Oberflächenwelle auf spezifische Art und Weise verändert, sodass eine nachlassende Krafteinwirkung auf die Distanzhülse 1 in der Variation der empfangenen Oberflächenwelle erkannt werden kann.

Die Wandlereigenschaften des Materials 4 der Distanzhülse 1 sind u.a. abhängig von einer Mindestkorngröße und der entsprechenden Korngrößenverteilung, der Härte, insbesondere der Mikrohärte, der Zähigkeit und Duktilität und der Homogenität, Textur und dem Gefüge. Entsprechenden Anforderungen entspricht insbesondere das Material 42CrMo4, das demzufolge als Material 4 für eine Distanzhülse 1 besonders geeignet ist.

In Fig. 1 ist die besonders platzsparende Sandwichbauweise von Sender 2 und Empfänger 3 dargestellt, bei der der Sender 2 nur durch eine dünne Folie von dem Empfänger 3 getrennt ist, die beiden Bauteile aber übereinander angeordnet sind.

Dem Fachmann ist klar, dass auch eine andere Bauweise von der vorliegenden Erfindung umfasst ist, bei der beispielsweise der Sender 2 einen größeren räumlichen Abstand zu dem Empfänger 3 besitzt. Dabei kann auch vorgesehen sein, dass der Empfänger 3 Signale vom Sender 2 empfängt, die auf einem direkten Ausbreitungsweg vom Sender 2 stammen und nicht erst über eine Reflexion den Weg zum Empfänger 3 gefunden haben.

Fig. 2 zeigt eine weitere Ausführungsform, bei der zur Verbesserung der Signalgüte eine Messstrecke 5 vorgesehen ist, auf der sich die Oberflächenwellen ausbreiten. Die Messstrecke weist dabei einen Randbereiche 6 auf, die für die Oberflächenwellen Reflexionsgrenzen darstellen. Die Reflexionsgrenzen definieren damit einen geometrischen Bereich für die Ausbreitungsfläche der Oberflächenwellen, in denen die Wellen durch die Strukturdynamik der Distanzhülse 1 beeinflusst werden.

Die Messstrecke 5 kann dabei in der Art einer Nut gegenüber der weiteren Topologie der Distanzhülse abgesenkt sein und darüber hinaus auch eine glattgeschliffene Oberfläche aufweisen.

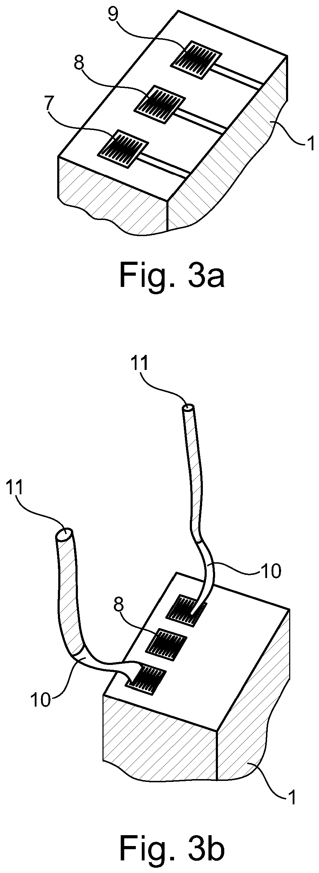

Fig. 3a zeigt eine erste drahtgebundene Möglichkeit zur Verbindung der zum Sender 2 führenden Leitung 7 sowie der zum Empfänger 3 führenden Leitung 9. Dargestellt ist eine Kontaktfläche für die Anschlüsse (Leitung 7, Masseanschluss 8 und Leitung 9) die über einen drahtgebundenen Anschluss kontaktierbar ist. Die Bereitstellung der Signale zum Anregen des Senders 2 und zum Auswerten der empfangenen Signale durch den Empfänger 3 kann dann in einer nachgelagerten Einheit stattfinden, die nicht mehr zwangsläufig in die Distanzhülse integriert sein muss.

Fig. 3b zeigt eine weitere Möglichkeit für die Anbindung des Senders 2 und des Empfängers 3, wobei diese drahtlos ausgestaltet ist. Mit dem Bezugszeichen 10 ist jeweils ein Antennenelement gekennzeichnet, welches Bestandteil der Antennenanordnung 11 ist. Dargestellt sind Dipolantennen, die eine Zuleitung für den Sender 2 und den Empfänger 3 bilden. Die Montage einer solchen Distanzhülse ist einfacher, da das manuelle Kontaktieren mit drahtgebundenen Leitern entfällt.

### Bezugszeichenliste:

- 1: Distanzhülse
- 2: Sender
- 3: Empfänger
- 4: Material der Distanzhülse
- 5: Messstrecke
- 6: Randbereich der Messstrecke
- 7: elektrische Leitung zum Sender
- 8: Masseanschluss
- 9: elektrische Leitung vom Empfänger
- 10: Antennenelement
- 11: Antennenanordnung

## Patentansprüche

1. Schraubverbindung, umfassend:
einen Schraubenkörper mit einem Außengewinde,
ein Gegenstück, insbesondere eine Schraubenmutter, mit einem auf das Außengewinde abgestimmten Innengewinde, in das der Schraubenkörper eingeschraubt ist,
eine Distanzhülse (1) zum Klemmen zwischen einem Schraubenkopf des Schraubenkörpers und dem Gegenstück, und
ein Sensorsystem, das dazu ausgelegt ist, einen in dem Schraubenkörper wirkenden Spannungszustand zu bestimmen,
**dadurch gekennzeichnet, dass**
das Sensorsystem einen in der Distanzhülse (1) angeordneten Sender (2) sowie einen in der Distanzhülse (1) angeordneten Empfänger (3) aufweist, wobei
der Sender (2) dazu ausgelegt ist, elektrische Energie in mechanische Oberflächenwellen umzuwandeln,
der Empfänger (3) dazu ausgelegt ist, mechanische Oberflächenwellen in elektrische Energie umzuwandeln, und
das Sensorsystem ferner dazu ausgelegt ist, anhand der Veränderung der ausgesendeten mechanischen Oberflächenwellen zu den empfangenen mechanische Oberflächenwellen auf den in dem Schraubenkörper und/oder der Distanzhülse (1) wirkenden Spannungszustand zu schließen,
wobei sich unmittelbar an den Sender (2) und/oder den Empfänger (3) eine Messstrecke (5) in der Oberfläche der Distanzhülse (1) anschließt, die sich in ihrer Oberflächentopologie gegenüber den anderen Bereichen der Distanzhülse (1) absetzt, vorzugsweise durch Vorsehen einer Nut, die die Messstrecke (5) definiert und deren Randbereichen (6) zu einem Reflektieren der die Oberflächenwellen führen, wobei bevorzugterweise das Nutinnere gegenüber den Randbereichen (6) abgesetzt ist und insbesondere glatt geschliffen ist.

2. Schraubverbindung nach Anspruch 1, wobei der Sender (2) sowie der Empfänger (3) des Sensorsystems jeweils ein ferroelektrisches Element, insbesondere ein Piezoelement ist.

3. Schraubverbindung nach einem der vorhergehenden Ansprüche, wobei der Sender (2) dazu ausgelegt ist, mechanische Oberflächenwellen an der Distanzhülse (1) hervorzurufen und/oder der Empfänger (3) dazu ausgelegt ist, mechanische Oberflächenwellen der Distanzhülse (1) aufzunehmen.

4. Schraubverbindung nach einem der vorhergehenden Ansprüche, wobei der Sender (2) und/oder der Empfänger (3) stoffschlüssig in der Distanzhülse (1) angeordnet sind.

5. Schraubverbindung nach einem der vorhergehenden Ansprüche, wobei das Sensorsystem dazu ausgelegt ist, eine Spannungzustandsänderung in der Distanzhülse (1) und/oder des Schraubenkörpers aufgrund einer Veränderung der Wellen-Charakteristik zwischen den ausgesendeten mechanischen Oberflächenwellen und den empfangenen mechanische Oberflächenwellen zu bestimmen.

6. Schraubverbindung nach dem vorhergehenden Anspruch 5, wobei die Wellen-Charakteristik eine Wellenamplitude, eine Ausbreitungsfrequenz, eine Güte, eine relative Phasenlage und/oder die dominante Schwingungsmode berücksichtigt.

7. Schraubverbindung nach einem der vorhergehenden Ansprüche, wobei die mechanischen Oberflächenwellen Körperschallwellen, insbesondere Rayleigh-Wellen sind.

8. Schraubverbindung nach einem der vorhergehenden Ansprüche 6 oder 7, wobei das Sensorsystem ferner dazu ausgelegt ist, eine Gruppenlaufgeschwindigkeit, eine obere Einhüllende und/oder eine untere Einhüllende einer Welle, insbesondere Körperschallwelle, zu analysieren, um auf einen veränderten Spannungszustand der Distanzhülse (1) und/oder des Schraubenkörpers zu schließen.

9. Schraubverbindung nach einem der vorhergehenden Ansprüche, wobei die Ausbreitungsfrequenz der vom Sender (2) abgegebenen mechanischen Oberflächenwellen im Bereich von 20 kHz bis 20 MHz liegt und/oder die Amplitude der vom Sender (2) abgegebenen mechanischen Oberflächenwellen im Bereich weniger Nanometer bis Pikometer liegt.

10. Schraubverbindung nach einem der vorhergehenden Ansprüche, wobei der Sender (2) und/oder der Empfänger (3) in die Distanzhülse (1) eingebettet sind, vorzugsweise allseitig von dem Material (4) der Distanzhülse (1) umgeben sind.

11. Schraubverbindung nach einem der vorhergehenden Ansprüche, wobei das Sensorsystem dazu ausgelegt ist, den Spannungszustand der Distanzhülse (1) und/oder des Schraubenkörpers in einer Frequenz von mindestens 1 kHz, vorzugsweise in einer Frequenz von mindestens 3 kHz, bevorzugterweise in einer Frequenz von mindestens 8 kHz zu bestimmen.

12. Schraubverbindung nach einem der vorhergehenden Ansprüche, wobei das Sensorsystem ferner dazu ausgelegt ist, beim Erfassen einer Variation des Spannungszustands der Distanzhülse (1) und/oder des Schraubenkörpers, die oberhalb eines bestimmten Schwellenwerts liegt, ein Signal an eine Kontrolleinheit zu senden, um entsprechende Gegenmaßnahmen anzustoßen.

13. Baumaschine, insbesondere Kran, mit mindestens einer Schraubverbindung nach einem der vorhergehenden Ansprüche, wobei eine Signalisierung über die Notwendigkeit einer Wartung auf den von dem Sensorsystem bestimmten Spannungszustand der Distanzhülse (1) und/oder des Schraubenkörpers basiert.

14. Kran mit mindestens einer Schraubverbindung nach einem der vorhergehenden Ansprüche 1-12 oder nach dem vorhergehenden Anspruch 14, wobei eine Traglasttabelle zum zulässigen Ausführen eines Lasthubs des Krans in einer Steuereinheit abgelegt ist und die Steuereinheit dazu ausgelegt ist, auf Grundlage des mindestens einen bestimmten Spannungszustands der Distanzhülse (1) und/oder des Schraubenkörpers die Traglasttabelle zu aktualisieren, vorzugsweise wobei die mindestens eine Schraubverbindung Mastschüsse oder Auslegerelemente des Krans verbindet.

## Claims

1. Screw connection, comprising:
a screw body with an external thread,
a mating piece, in particular a screw nut, with an internal thread matched to the external thread, into which the screw body is screwed,
a spacer sleeve (1) for clamping between a screw head of the screw body and the mating piece, and
a sensor system which is configured to determine a stress state acting in the screw body,
**characterized in that**
the sensor system has a transmitter (2) arranged in the spacer sleeve (1) as well as a receiver (3) arranged in the spacer sleeve (1), wherein
the transmitter (2) is configured to convert electrical energy into mechanical surface waves,
the receiver (3) is configured to convert mechanical surface waves into electrical energy, and
the sensor system is further configured to infer the stress state acting in the screw body and/or the spacer sleeve (1) based on the change of the emitted mechanical surface waves relative to the received mechanical surface waves, wherein a measuring section (5) in the surface of the spacer sleeve (1) directly adjoins the transmitter (2) and/or the receiver (3), which measuring section sets itself apart in its surface topology relative to the other regions of the spacer sleeve (1), preferably by providing a groove which defines the measuring section (5) and edge regions (6) of which lead to a reflection of the surface waves, wherein preferably the groove interior is set apart relative to the edge regions (6) and is in particular ground smooth.

2. Screw connection according to claim 1, wherein the transmitter (2) as well as the receiver (3) of the sensor system is each a ferroelectric element, in particular a piezo element.

3. Screw connection according to any one of the preceding claims, wherein the transmitter (2) is configured to induce mechanical surface waves at the spacer sleeve (1) and/or the receiver (3) is configured to receive mechanical surface waves of the spacer sleeve (1).

4. Screw connection according to any one of the preceding claims, wherein the transmitter (2) and/or the receiver (3) are arranged in the spacer sleeve (1) in a materially bonded manner.

5. Screw connection according to any one of the preceding claims, wherein the sensor system is configured to determine a change in stress state in the spacer sleeve (1) and/or of the screw body on the basis of a change in the wave characteristic between the emitted mechanical surface waves and the received mechanical surface waves.

6. Screw connection according to the preceding claim 5, wherein the wave characteristic takes into account a wave amplitude, a propagation frequency, a quality factor, a relative phase position and/or the dominant oscillation mode.

7. Screw connection according to any one of the preceding claims, wherein the mechanical surface waves are structure-borne sound waves, in particular Rayleigh waves.

8. Screw connection according to any one of the preceding claims 6 or 7, wherein the sensor system is further configured to analyze a group delay velocity, an upper envelope and/or a lower envelope of a wave, in particular a structure-borne sound wave, in order to infer a changed stress state of the spacer sleeve (1) and/or of the screw body.

9. Screw connection according to any one of the preceding claims, wherein the propagation frequency of the mechanical surface waves emitted by the transmitter (2) is in the range of 20 kHz to 20 MHz and/or the amplitude of the mechanical surface waves emitted by the transmitter (2) is in the range of a few nanometers to picometers.

10. Screw connection according to any one of the preceding claims, wherein the transmitter (2) and/or the receiver (3) are embedded in the spacer sleeve (1), preferably surrounded on all sides by the material (4) of the spacer sleeve (1).

11. Screw connection according to any one of the preceding claims, wherein the sensor system is configured to determine the stress state of the spacer sleeve (1) and/or of the screw body at a frequency of at least 1 kHz, preferably at a frequency of at least 3 kHz, more preferably at a frequency of at least 8 kHz.

12. Screw connection according to any one of the preceding claims, wherein the sensor system is further configured to send a signal to a control unit upon detecting a variation of the stress state of the spacer sleeve (1) and/or of the screw body that is above a certain threshold value in order to initiate corresponding countermeasures.

13. Construction machine, in particular a crane, comprising at least one screw connection according to any one of the preceding claims, wherein a signaling about the necessity of maintenance is based on the stress state of the spacer sleeve (1) and/or of the screw body determined by the sensor system.

14. Crane comprising at least one screw connection according to any one of the preceding claims 1-12 or according to the preceding claim 14, wherein a load capacity chart for the permissible execution of a load lift of the crane is stored in a control unit and the control unit is configured to update the load capacity chart on the basis of the at least one determined stress state of the spacer sleeve (1) and/or of the screw body, preferably wherein the at least one screw connection connects mast sections or boom elements of the crane.

## Revendications

1. Assemblage par vis, comprenant :
un corps de vis avec un filetage extérieur,
une contrepièce, en particulier un écrou de vis, avec un taraudage adapté au filetage extérieur, dans lequel le corps de vis est vissé,
une douille d'espacement (1) pour le serrage entre une tête de vis du corps de vis et la contrepièce, et
un système de capteurs qui est conçu pour déterminer un état de contrainte agissant dans le corps de vis,
**caractérisé en ce que**
le système de capteurs présente un émetteur (2) disposé dans la douille d'espacement (1) ainsi qu'un récepteur (3) disposé dans la douille d'espacement (1), dans lequel
l'émetteur (2) est conçu pour convertir de l'énergie électrique en ondes de surface mécaniques,
le récepteur (3) est conçu pour convertir des ondes de surface mécaniques en énergie électrique, et
le système de capteurs est en outre conçu pour déduire, à partir de la variation des ondes de surface mécaniques émises par rapport aux ondes de surface mécaniques reçues, l'état de contrainte agissant dans le corps de vis et/ou la douille d'espacement (1),
dans lequel une section de mesure (5) dans la surface de la douille d'espacement (1) se raccorde directement à l'émetteur (2) et/ou au récepteur (3), laquelle se démarque par sa topologie de surface par rapport aux autres zones de la douille d'espacement (1), de préférence par la prévision d'une rainure qui définit la section de mesure (5) et dont les zones de bord (6) conduisent à une réflexion des ondes de surface, dans lequel de préférence l'intérieur de la rainure est en retrait par rapport aux zones de bord (6) et est en particulier meulé lisse.

2. Assemblage par vis selon la revendication 1, dans lequel l'émetteur (2) ainsi que le récepteur (3) du système de capteurs sont chacun un élément ferroélectrique, en particulier un élément piézoélectrique.

3. Assemblage par vis selon l'une quelconque des revendications précédentes, dans lequel l'émetteur (2) est conçu pour provoquer des ondes de surface mécaniques au niveau de la douille d'espacement (1) et/ou le récepteur (3) est conçu pour capter des ondes de surface mécaniques de la douille d'espacement (1).

4. Assemblage par vis selon l'une quelconque des revendications précédentes, dans lequel l'émetteur (2) et/oder le récepteur (3) sont disposés par liaison de matière dans la douille d'espacement (1).

5. Assemblage par vis selon l'une quelconque des revendications précédentes, dans lequel le système de capteurs est conçu pour déterminer une variation d'état de contrainte dans la douille d'espacement (1) et/ou du corps de vis sur la base d'une variation de la caractéristique d'onde entre les ondes de surface mécaniques émises et les ondes de surface mécaniques reçues.

6. Assemblage par vis selon la revendication 5 précédente, dans lequel la caractéristique d'onde prend en compte une amplitude d'onde, une fréquence de propagation, un facteur de qualité, une position de phase relative et/ou le mode d'oscillation dominant.

7. Assemblage par vis selon l'une quelconque des revendications précédentes, dans lequel les ondes de surface mécaniques sont des ondes acoustiques de volume, en particulier des ondes de Rayleigh.

8. Assemblage par vis selon l'une quelconque des revendications 6 ou 7 précédentes, dans lequel le système de capteurs est en outre conçu pour analyser une vitesse de groupe, une enveloppe supérieure et/ou une enveloppe inférieure d'une onde, en particulier d'une onde acoustique de volume, pour déduire un état de contrainte modifié de la douille d'espacement (1) et/ou du corps de vis.

9. Assemblage par vis selon l'une quelconque des revendications précédentes, dans lequel la fréquence de propagation des ondes de surface mécaniques émises par l'émetteur (2) est dans la plage de 20 kHz à 20 MHz et/ou l'amplitude des ondes de surface mécaniques émises par l'émetteur (2) est dans la plage de quelques nanomètres à picomètres.

10. Assemblage par vis selon l'une quelconque des revendications précédentes, dans lequel l'émetteur (2) et/ou le récepteur (3) sont noyés dans la douille d'espacement (1), de préférence sont entourés de tous côtés par le matériau (4) de la douille d'espacement (1).

11. Assemblage par vis selon l'une quelconque des revendications précédentes, dans lequel le système de capteurs est conçu pour déterminer l'état de contrainte de la douille d'espacement (1) et/ou du corps de vis à une fréquence d'au moins 1 kHz, de préférence à une fréquence d'au moins 3 kHz, de préférence à une fréquence d'au moins 8 kHz.

12. Assemblage par vis selon l'une quelconque des revendications précédentes, dans lequel le système de capteurs est en outre conçu pour envoyer un signal à une unité de contrôle lors de la détection d'une variation de l'état de contrainte de la douille d'espacement (1) et/ou du corps de vis qui se situe au-dessus d'une valeur de seuil déterminée, afin de déclencher des contre-mesures correspondantes.

13. Machine de construction, en particulier grue, avec au moins un assemblage par vis selon l'une quelconque des revendications précédentes, dans laquelle une signalisation concernant la nécessité d'une maintenance est basée sur l'état de contrainte de la douille d'espacement (1) et/ou du corps de vis déterminé par le système de capteurs.

14. Grue avec au moins un assemblage par vis selon l'une quelconque des revendications 1 à 12 précédentes ou selon la revendication 14 précédente, dans laquelle un tableau de charges pour l'exécution admissible d'un levage de charge de la grue est mémorisé dans une unité de commande et l'unité de commande est conçue pour actualiser le tableau de charges sur la base de l'au moins un état de contrainte déterminé de la douille d'espacement (1) et/ou du corps de vis, de préférence dans laquelle l'au moins un assemblage par vis relie des éléments de mât ou des éléments de flèche de la grue.
